# EUROPEAN PATENT APPLICATION

(11) **EP 3 623 177 A1**
(43) Date of publication of application: **18.03.2020**
(21) Application number: 19196842.9
(22) Date of filing: 12.09.2019
(51) Int. Cl.: B60C 11/04, B60C 11/13

(54) **A PNEUMATIC TIRE**

(30) Priority: 13.09.2018 KR 20180109541
(71) Applicant: HANKOOK TIRE & TECHNOLOGY CO., LTD, Gangnam-gu Seoul 06133 (KR)
(72) Inventor: CHO, Jeong Eun, 34379 Deajeon (KR); KWAK, Seung Ju, 12594 Gyeonggi-do (KR); KANG, Seung Koo, 06553 Seoul (KR)
(74) Representative: Pfenning, Meinig & Partner mbB

(57) **Abstract**

Disclosed herein is a pneumatic tire, and more particularly, a pneumatic tire capable of enhancing running performance on wet surfaces (wet performance) without losing running performance on dry surfaces (dry performance) by improving a groove structure. The pneumatic tire includes a tread (100), a sidewall, and a bead while having a block (110) and a groove (120) formed on the tread (100), wherein first inclined portions (121) inclined toward the bottom of the groove (120) on the side of the groove (120) are alternately installed in a longitudinal direction of the groove (120).

## Description

### BACKGROUND OF THE INVENTION

### Field of the Invention

The present invention relates to a pneumatic tire, and more particularly, to a pneumatic tire capable of enhancing running performance on wet surfaces (wet performance) without losing running performance on dry surfaces (dry performance) by improving a groove structure.

### Description of the Related Art

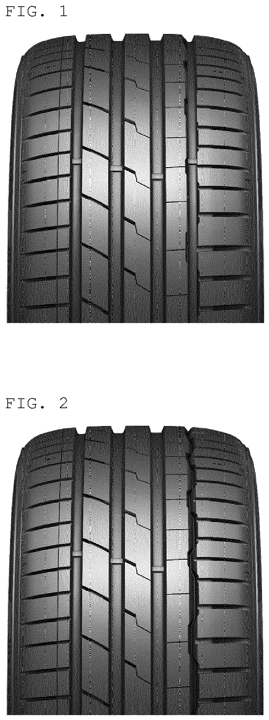

Grooves are grooves recessed on a tread of a tire, and each have a typical width of 1.6 mm or more as illustrated in FIG. 1. In particular, the grooves which are arranged in the running direction of the tire and are wide and deep are referred to as main grooves or longitudinal grooves. The main grooves must be designed in consideration of drainage, noise, and maneuverability and stability, and generally consist of three types of grooves such as straight grooves, zigzag grooves, and V-shaped grooves. Especially, the straight grooves are mainly used for European high-performance tires where handling, braking, and high-speed running performance are important on the wet surfaces.

Lateral grooves arranged in the lateral direction of the main grooves allow the water discharged from the main grooves to be discharged and can accomplish enhancement in the running performance on wet surfaces (wet performance) of the tire.

In order to enhance running performance on the wet surfaces, it is possible to increase the widths of the main grooves and the lateral grooves. However, noise may be caused due to reduction in the ground area with the road surface, and running performance on dry surfaces (dry performance) may be lost due to deterioration in the tread block stiffness of the tire.

Hereinafter, the related art will be described in which reference numerals are irrelevant to the present invention.

Korean Patent Application Publication No. 10-2012-0004812, entitled "Pneumatic Tire for Vehicle", discloses a pneumatic tire for a vehicle, which includes a tread, a sidewall, and a bead, the tread having blocks and grooves formed thereon, a tie bar being installed between the blocks, wherein the tie bar is coupled to an adjacent block by the joint formed at the upper end thereof. The above patent document discloses a technology for maintaining excellent traction performance until the end of wear by automatically removing the tie bar, which is used to improve the performance of block patterns at the beginning of wear, after the middle of wear. However, there is a problem in that the tie bar leads to the complicated design of vulcanization molds and the tread blocks are damaged and cracked at the moment when the tie bar is removed.

Korean Patent No. 10-1583426, entitled "Pneumatic Tire for Vehicle", discloses a pneumatic tire for a vehicle, which includes a tread, sidewalls on both sides of the tread, and a bead at the end of each of the sidewalls, the tread having a plurality of blocks divided by longitudinal grooves and lateral grooves, a tie bar being installed to connect the blocks adjacent to each groove, wherein the vehicle tire has the tie bar improved by forming a round chamfer on the surface of the lateral groove adjacent to the tie bar. The above patent document discloses a technology for simultaneously improving drainage and tread block stiffness by the round chamfer. However, since the tie bar focuses only on block stiffness, the ground area is lowered by the formation of the chamfer, which may lead to a decrease in the ground force.

### Citation List

### Patent Literature

Patent Literature 1: Korean Patent Application Publication No. 10-2012-0004812 "Pneumatic Tire for Vehicle" (published on January 13, 2012)
Patent Literature 2: Korean Patent No. 10-1583426 "Pneumatic Tire for Vehicle" (published on January 20, 2016)

### SUMMARY OF THE INVENTION

It is an object of the present invention to provide a pneumatic tire having a new main groove shape capable of enhancing running performance on wet surfaces (wet performance) without losing running performance on dry surfaces (dry performance).

The present invention is not limited to the above-mentioned object, and other objects of the present invention can be clearly understood by those skilled in the art to which the present invention pertains from the following description.

To accomplish the above object, in accordance with one aspect of the present invention, there is provided a pneumatic tire that includes a tread (100), a sidewall, and a bead while having a block (110) and a groove (120) formed on the tread (100), wherein first inclined portions (121) inclined toward the bottom of the groove (120) on the side of the groove (120) are alternately installed in a longitudinal direction of the groove (120).

### BRIEF DESCRIPTION OF THE DRAWINGS

FIG. 1 is a photograph illustrating a conventional pneumatic tire with main grooves.
FIG. 2 is a photograph illustrating a pneumatic tire of the present invention.
FIG. 3 is a perspective view illustrating main parts of the pneumatic tire of the present invention.
FIG. 4 is a plan view illustrating main parts of the pneumatic tire of the present invention.
FIG. 5 is a cross-sectional view of the groove taken along line a-a' of FIG. 4 in the pneumatic tire of the present invention.
FIG. 6 is a cross-sectional view of the groove taken along line b-b' of FIG. 4 in the pneumatic tire of the present invention.

### DETAILED DESCRIPTION OF THE PREFERRED EMBODIMENTS

Reference will now be made in detail to exemplary embodiments of the present invention, examples of which are illustrated in the accompanying drawings. The present invention may, however, be embodied in different forms and should not be construed as limited to the embodiments set forth herein. For clear explanation of the present invention, parts irrelevant to the description may be omitted in the drawings, and like reference numerals refer to like parts throughout the specification.

In the whole specification, it will be understood that when an element is referred to as being "connected (joined, contacted, or coupled)" to another element, it can be "directly connected" to the other element or it can be "indirectly connected" to the other element with other elements being interposed therebetween. In addition, it will be understood that when a component is referred to as "comprising or including" any component, it does not exclude other components, but can further comprise or include the other components unless otherwise specified.

The terminology used in the present disclosure is for the purpose of describing particular embodiments only and is not intended to limit the invention. As used in the disclosure and the appended claims, the singular forms "a", "an" and "the" are intended to include the plural forms as well, unless context clearly indicates otherwise. It will be further understood that the terms "comprises/includes" and/or "comprising/including" when used in this specification, specify the presence of stated features, integers, steps, operations, elements, components, and/or groups thereof, but do not preclude the presence or addition of one or more other features, integers, steps, operations, elements, components, and/or groups thereof.

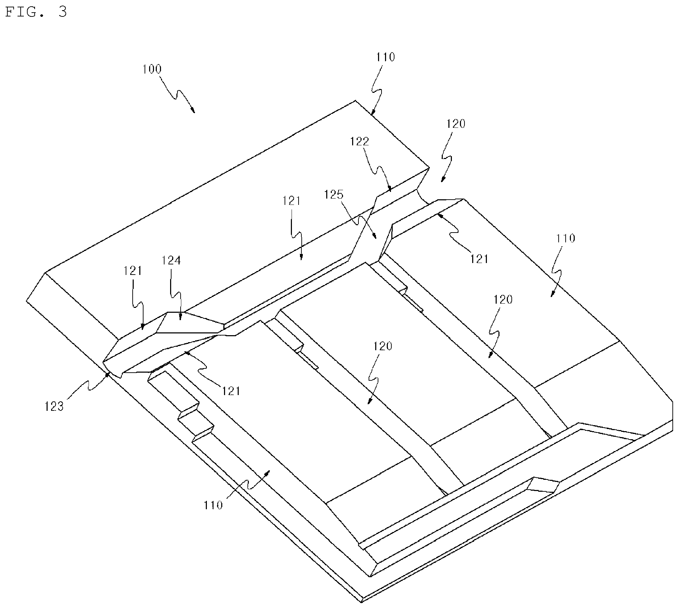

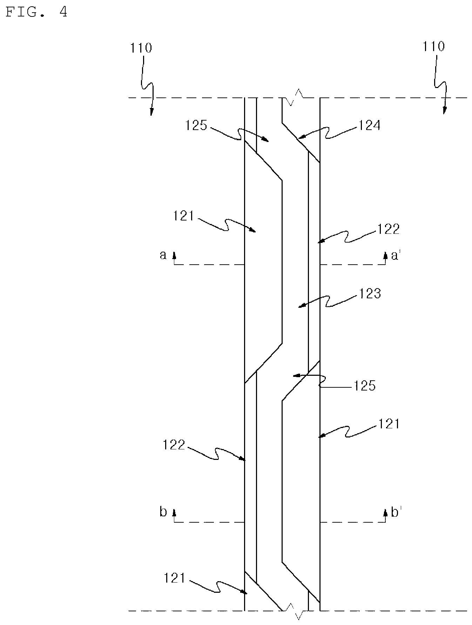

Hereinafter, exemplary embodiments of the present invention will be described in detail with reference to the accompanying drawings. FIG. 2 is a photograph illustrating a pneumatic tire of the present invention. FIG. 3 is a perspective view illustrating main parts of the pneumatic tire of the present invention. FIG. 4 is a plan view illustrating main parts of the pneumatic tire of the present invention.

The present invention provides a pneumatic tire that includes a tread 100, a sidewall, and a bead, and has a block 110 and a groove 120 formed on the tread 100, wherein first inclined portions 121 inclined toward the bottom of the groove 120 on the side of the groove 120 are alternately installed in the longitudinal direction of the groove 120. The groove 120 is a main groove formed in a running direction.

As the first inclined portions 121 are alternately installed in the longitudinal direction of the groove 120, the first inclined portions 121 are shaped to engage with each other. This shape enables the stiffness of the tire block 110 to be maintained since the first inclined portions are bound to each other when a force is applied to the tire block 110.

FIG. 3 also illustrates lateral grooves formed horizontally on the side of the main groove 120. The lateral grooves serve to laterally discharge the water discharged from the main groove.

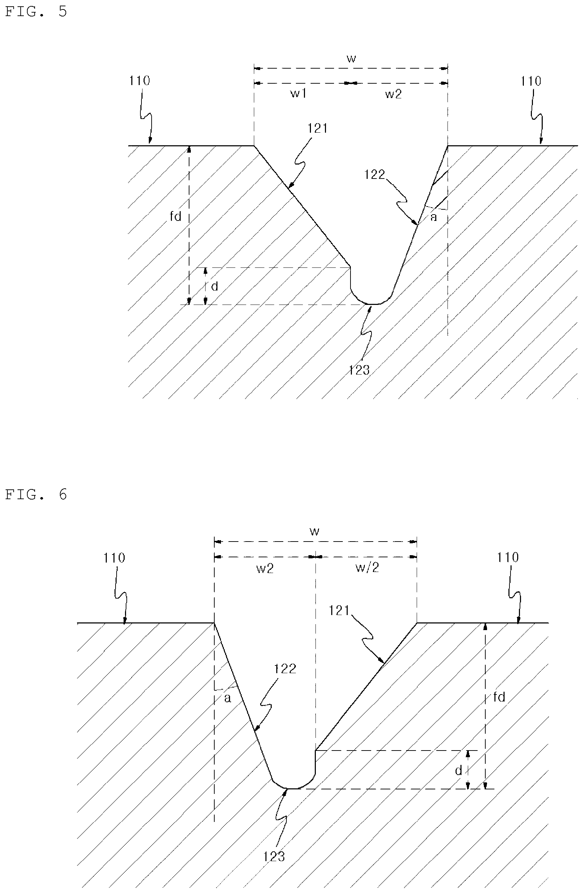

FIG. 5 is a cross-sectional view of the groove taken along line a-a' of FIG. 4 in the pneumatic tire of the present invention. As illustrated in FIG. 5, the groove 120 preferably has the first inclined portions 121, a second inclined portion 122 formed opposite to the side on which the first inclined portion 121 is formed, and a secondary groove 123 formed on the bottom of the second inclined portion 122 in cross-sectional shape.

It is preferable that the first inclined portion 121 has a width w1 that is 40 to 60% of the sum w2 of the width of the second inclined portion 122 and the width of the secondary groove 123. FIG. 6 is a cross-sectional view of the groove taken along line b-b' of FIG. 4 in the pneumatic tire of the present invention. FIG. 6 illustrates a cross-sectional shape that is symmetric to FIG. 5. According to such a configuration, it is possible to secure a block stiffness higher than the conventional main groove since the first inclined portions 121 are alternated inward and outward of the tire to maintain a block shape and bound to each other while the main groove has the same width "w" as the related art to secure a cross-sectional area that enables drainage.

To this end, the angle a formed between the second inclined portion 122 and the vertical line on the upper surface of the block 110 is preferably greater than 0° and less than 30°. The second inclined portion 122 may mitigate a sudden change of the first inclined portions 121 in the groove 120 to prevent cracking in the groove 120.

It is preferable that the secondary groove 123 has a depth d that is 50% or less of the total depth fd of the groove. Accordingly, the depth d of the secondary groove 123 is preferably set to 2 to 4mm. The secondary groove 123 has a zigzag shape as the first inclined portions 122 are shaped to engage with each other.

The following table indicates the results of stiffness analysis according to the set value of the depth d of the secondary groove 123.

**[Table 1]**

| Item | Circumferential Stiffness | | Lateral Stiffness | |
|---|---|---|---|---|
| | N/mm | Index | N/mm | Index |
| d = 2 | 36.457 | 100.0% | 45.088 | 100.0% |
| d = 3 | 36.571 | 100.3% | 45.226 | 100.3% |
| d = 4 | 36.614 | 100.4% | 45.245 | 100.3% |

According to the above table 1, when the depth d of the secondary groove 123 is 2 mm, the same result as the conventional tire can be obtained in circumferential stiffness and lateral stiffness. It can be seen that the circumferential stiffness and the lateral stiffness are reinforced by 0.3 to 0.4% as the depth d of the secondary groove 123 increases.

However, if the depth d of the secondary groove 123 is too large, cracks may be caused and stones may be fitted therebetween. Hence, drainage performance may be rather deteriorated because a separate stone ejector must be installed. For this reason, the depth d of the secondary groove 123 is preferably set to 2 to 4 mm as described above in the present invention.

In addition, the present invention provides a configuration in which each first inclined portion 121 has inclined surfaces 124 formed at both ends thereof. Accordingly, the adjacent inclined surfaces 124 of the respective first inclined potions 121 form an oblique groove 125.

Through such a configuration, it is possible to suppress cracking by removing a sudden change factor in the groove, and to expect an effect of applying the binding force of each of the first inclined portions 121 step by step.

According to the configuration of the present invention, the present invention provides the pneumatic tire having more improved handling performance on wet surfaces while having the same handling performance on dry surfaces as the conventional tire.

As is apparent from the above description, in accordance with the exemplary embodiments of the present invention, there is provided the pneumatic tire having the new main groove shape capable of enhancing running performance on wet surfaces (wet performance) without losing running performance on dry surfaces (dry performance).

The following table is obtained as a result of comparing the conventional tire with the pneumatic tire to which the groove of the present invention is applied to evaluate them by the present inventor.

**[Table 2]**

| Evaluation Item (Point) | Conventional Tire | Tire of the Present Invention |
|---|---|---|
| Handling on Dry Surface (Dry Handling) | 6.75 | 6.75 |
| Handling on Wet Surface (Wet Handling) | 6.75 | 7 |

The above table 2 indicates actual vehicle evaluation, and the tire of the present invention can obtain more improved handling performance on wet surfaces while having the same handling performance on dry surfaces as the conventional tire.

The present invention is not limited to the above effects, and it should be understood that the present invention includes all effects which can be inferred from the detailed description of the present invention or the configuration of the invention defined by the appended claims.

The above-mentioned embodiments of the present invention are merely examples, and it will be understood by those skilled in the art that various modifications may be made without departing from the spirit and scope or essential features of the invention. Therefore, it should be understood that the embodiments described above are for purposes of illustration only in all aspects and are not intended to limit the scope of the present invention. For example, each component described in a single form may be implemented in a distributed form, and similarly, components described in the distributed form may be implemented in a combined form.

The scope of the present invention is defined by the appended claims, and it should be construed that all modifications or variations derived from the meaning, scope, and equivalent concept of the claims fall within the scope of the invention.

## Claims

1. A pneumatic tire comprising a tread (100), a sidewall, and a bead while having a block (110) and a groove (120) formed on the tread (100), wherein first inclined portions (121) inclined toward the bottom of the groove (120) on the side of the groove (120) are alternately installed in a longitudinal direction of the groove (120).

2. The pneumatic tire according to claim 1, wherein the groove (120) has the first inclined portions (121), a second inclined portion (122) formed opposite to the side on which the first inclined portion (121) is formed, and a secondary groove (123) formed on the bottom of the second inclined portion (122) in cross-sectional shape.

3. The pneumatic tire according to claim 2, wherein the first inclined portion (121) has a width (w1) that is 40 to 60% of the sum (w2) of the width of the second inclined portion (122) and the width of the secondary groove (123).

4. The pneumatic tire according to claim 3, wherein an angle (a) formed between the second inclined portion (122) and a vertical line on an upper surface of the block (110) is greater than 0° and less than 30°.

5. The pneumatic tire according to claim 4, wherein the secondary groove (123) has a depth (d) that is 50% or less of the total depth (fd) of the groove.

6. The pneumatic tire according to claim 5, wherein the depth (d) of the secondary groove (123) is 2 to 4mm.

7. The pneumatic tire according to claim 1, wherein each of the first inclined portions (121) has inclined surfaces (124) formed at both ends thereof.

8. The pneumatic tire according to claim 7, wherein the adjacent inclined surfaces (124) of the respective first inclined potions (121) form an oblique groove (125).
